(19) Europäisches Patentamt
European Patent Office
Office européen des brevets

(11) EP 3 606 874 B1

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(21) Anmeldenummer: **17788135.6**

(22) Anmeldetag: **05.10.2017**

(51) Int Cl.:
***C01B 33/107*** (2006.01) ***B01J 8/18*** (2006.01)

(86) Internationale Anmeldenummer:
**PCT/EP2017/075420**

(87) Internationale Veröffentlichungsnummer:
**WO 2019/068335 (11.04.2019 Gazette 2019/15)**

(54) **VERFAHREN ZUR HERSTELLUNG VON CHLORSILANEN**

PROCESS FOR THE PREPARATION OF CHLOROSILANES

PROCÉDÉ DE PRÉPARATION DE CHLOROSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020 Patentblatt 2020/07**

(60) Teilanmeldung:
**21156630.2**

(73) Patentinhaber: **Wacker Chemie AG**
**81737 München (DE)**

(72) Erfinder:
- **RIMBÖCK, Karl-Heinz**
  **84431 Heldenstein (DE)**
- **ASEERVATHAM, Karone**
  **84489 Burghausen (DE)**
- **MÜLLER, Michael**
  **84489 Burghausen (DE)**
- **SOFINA, Natalia**
  **84489 Burghausen (DE)**

(74) Vertreter: **Belz, Ferdinand et al**
**Wacker Chemie AG**
**Hanns-Seidel-Platz 4**
**81737 München (DE)**

(56) Entgegenhaltungen:
**WO-A1-2010/028878** **WO-A1-2015/140028**
**WO-A2-02/48024**

- **FENG ZHANG ET AL: "Effect of Gas Distributor on Hydrodynamics and the Rochow Reaction in a Fluidized Bed Membrane Reactor", INDUSTRIAL & ENGINEERING CHEMISTRY RESEARCH., Bd. 55, Nr. 40, 19. September 2016 (2016-09-19), Seiten 10600-10608, XP055324939, US ISSN: 0888-5885, DOI: 10.1021/acs.iecr.6b02028**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 606 874 B1

## Beschreibung

Die Erfindung betrifft Verfahren zur Herstellung von Chlorsilanen in einem Wirbelschichtreaktor durch Umsetzung von einem Reaktionsgas mit einer Silicium enthaltenden partikulären Kontaktmasse, wobei der hydraulische Durchmesser des Wirbelschichtreaktors $d_{hyd}$, die Gasleerrohrgeschwindigkeit im Wirbelschicht-reaktor $u_L$ und der Sauterdurchmesser der partikulären Kontakt-masse $d_{32}$ gezielt gewählt werden.

Die Herstellung von polykristallinem Silicium als Ausgangsmaterial für die Fertigung von Chips oder Solarzellen erfolgt üblicherweise durch Zersetzung seiner flüchtigen Halogenverbindungen, insbesondere Trichlorsilan (TCS, $HSiCl_3$).

Polykristallines Silicium kann mittels des Siemens-Prozesses in Form von Stäben erzeugt werden, wobei polykristallines Silicium in einem Reaktor an erhitzten Filamentstäben abgeschieden wird. Als Prozessgas wird üblicherweise ein Gemisch aus TCS und Wasserstoff eingesetzt. Alternativ kann polykristallines Siliciumgranulat in einem Wirbelschichtreaktor hergestellt werden. Dabei werden Siliciumpartikeln mittels einer Gasströmung in einer Wirbelschicht fluidisiert, wobei diese über eine Heizvorrichtung auf hohe Temperaturen aufgeheizt wird. Durch Zugabe eines siliciumhaltigen Reaktionsgases wie TCS erfolgt eine Pyrolysereaktion an der heißen Partikeloberfläche, wodurch die Partikel in ihrem Durchmesser wachsen.

Die Herstellung von Chlorsilanen, insbesondere TCS, kann im Wesentlichen durch drei Verfahren erfolgen, denen folgende Reaktionen zugrunde liegen (vgl. WO2010/028878A1 und WO2016/198264A1) :

(1) $Si + 3HCl \dashrightarrow SiHCl_3 + H_2$ + Nebenprodukte

(2) $Si + 3SiCl_4 + 2H_2 \dashrightarrow 4SiHCl_3$ + Nebenprodukte

(3) $SiCl_4 + H_2 \dashrightarrow SiHCl_3 + HCl$ + Nebenprodukte

Als Nebenprodukte können weitere Halogensilane anfallen, beispielsweise Monochlorsilan ($H_3SiCl$), Dichlorsilan ($H_2SiCl_2$), Siliciumtetrachlorid (STC, $SiCl_4$) sowie Di- und Oligosilane. Ferner können Verunreinigungen wie Kohlenwasserstoffe, Organochlorsilane und Metallchloride Bestandteil der Nebenprodukte sein. Um hochreines TCS zu erzeugen, erfolgt daher anschließend üblicherweise eine Destillation.

Bei der Hydrochlorierung gemäß Reaktion (1) können aus metallurgischem Silicium unter Zusatz von Chlorwasserstoff (HCl) Chlorsilane in einem Wirbelschichtreaktor hergestellt werden, wobei die Reaktion exotherm verläuft. Dabei erhält man in der Regel TCS und STC als Hauptprodukte.

Eine weitere Möglichkeit zur Herstellung von TCS ist die thermische Konvertierung von STC und Wasserstoff in der Gasphase in Gegenwart oder Abwesenheit eines Katalysators.

Die Niedertemperaturkonvertierung gemäß Reaktion (2), wird in Gegenwart eines Katalysators (z.B. kupferhaltige Katalysatoren oder Katalysatormischungen) durchgeführt. Die Niedertemperaturkonvertierung kann in einem Wirbelschichtreaktor in Anwesenheit von metallurgischem Silicium bei Temperaturen zwischen 400°C und 700°C erfolgen.

Die Hochtemperaturkonvertierung gemäß Reaktion (3) ist ein endothermer Prozess. Dieses Verfahren findet üblicherweise in einem Reaktor unter hohem Druck bei Temperaturen zwischen 600 und 900°C statt.

WO 02/48024 offenbart ein Verfahren zur Herstellung von Trichlorsilan durch Umsetzung von Silicium mit Siliciumtetrachlorid und Wasserstoff unter Zugabe von Chlorwasserstoff, wobei die Verweilzeit des Chlorwasserstoffs im Reaktionsraum geringer ist, als die Verweilzeit des Siliciumtetrachlorids. Grundsätzlich sind die bekannten Verfahren aufwendig und energieintensiv. Insbesondere die Hydrochlorierung und die Niedertemperaturkonvertierung im Wirbelschichtreaktor laufen unter relativ hohen Temperaturen bzw. Drücken ab. Die erforderliche Energiezufuhr, die in der Regel elektrisch erfolgt, stellt einen erheblichen Kostenfaktor dar. Ferner ist es für eine kontinuierliche Prozessführung erforderlich, die Eduktkomponenten Silicium und Chlorwasserstoff (HCl) bzw. Silicium, STC und Wasserstoff unter den Reaktionsbedingungen in den Reaktor einzubringen, was mit einem erheblichen technischen Aufwand verbunden ist. Vor diesem Hintergrund ist es wichtig, eine möglichst hohe Produktivität - Menge an gebildeten Chlorsilanen pro Zeiteinheit und Reaktionsvolumen - und eine möglichst hohe Selektivität bezogen auf das gewünschte Zielprodukt (üblicherweise TCS) zu realisieren.

Somit bestand die Aufgabe der vorliegenden Erfindung darin, ein möglichst wirtschaftliches Verfahren zur Herstellung von Chlorsilanen bereitzustellen

Diese Aufgabe wird gelöst durch ein Verfahren zur Herstellung von Chlorsilanen, insbesondere TCS, in einem Wirbelschichtreaktor durch Umsetzung von einem Chlorwasserstoff enthaltenden Reaktionsgas mit einer partikulären Kontaktmasse, enthaltend Silicium und gegebenenfalls einen Katalysator, wobei die Chlorsilane die allgemeinen Formel $H_nSiCl_{4-n}$ und/oder $H_mCl_{6-m}Si_2$ mit n = 1-4 und m = 0-4 aufweisen. Bei dem Verfahren handelt es sich insbesondere um eine Hydrochlorierung, die durch die Reaktionsgleichung (1) beschrieben ist.

Bei dem erfindungsgemäßen Verfahren werden der hydraulische Durchmesser des Wirbelschichtreaktors $d_{hyd}$, die Gasleerrohrgeschwindigkeit im Wirbelschichtreaktor $u_L$ und der Sauterdurchmesser der partikulären Kontaktmasse $d_{32}$ derart gewählt, dass in einem kartesischen Koordinatensystem, in dem die Archimedes-Zahl Ar gegen die Reynolds-Zahl Re aufgetragen ist, Punkte auf einer Fläche abgebildet werden, wobei die Fläche definiert wird durch die Gleichungen 1a und 1b:

$$Ar = 3 \cdot 10^{-3} \cdot Re^2 - 8{,}18 \cdot Re + 1200 \qquad (1a)$$

$$Ar = 4 \cdot 10^{-6} \cdot Re^2 - 0{,}69 \cdot Re + 14400 \qquad (1b)$$

mit einer Untergrenze Ar = 1 und einer Obergrenze Ar = 3000. Die dimensionslose Archimedes-Zahl Ar wird dabei durch die Gleichung 3 bestimmt:

$$Ar = g \cdot \frac{d_{32}^{\;3}}{\upsilon_F^{\,2}} \cdot \frac{\rho_P - \rho_F}{\rho_F} \qquad (3),$$

wobei

- g die Erdbeschleunigung [m/s$^2$],
- $d_{32}$ den Partikel-Sauterdurchmesser [m],
- $\rho_p$ die Partikelfeststoffdichte [kg/m$^3$],
- $\rho_F$ die Fluiddichte [kg/m$^3$] und
- $\nu_F$ die kinematische Viskosität des Fluides [m$^2$/s] bedeuten.

Die dimensionslose Reynolds-Zahl Re wird durch die Gleichung 4 bestimmt:

$$Re = \frac{u_L \cdot d_{hyd}}{\upsilon_F} \qquad (4),$$

wobei

- $\upsilon_L$ die Gasleerrohrgeschwindigkeit [m/s] und
- $d_{hyd}$ der hydraulische Durchmesser [m] bedeuten.

Der hydraulische Durchmesser $d_{hyd}$ wird durch die Gleichung 5 bestimmt:

$$d_{hyd} = \frac{4 * A_{q,frei}}{U_{ges,benetzt}} \qquad (5),$$

wobei
$A_{q,\,frei}$ dem freien Strömungsquerschnitt [m$^2$] im Wirbelschichtreaktor und $U_{ges,\,benetzt}$ dem benetzten Umfang [m] jeweils aller Einbauten im Wirbelschichtreaktor entsprechen, wobei $d_{hyd}$ 0,7 bis 1,8 m, $u_L$ 0,05 bis 4 m/s und $d_{32}$ 5 bis 500 µm beträgt.

Es hat sich herausgestellt, dass sich durch eine bestimmte Kombination und Auswahl von konstruktiven Merkmalen (Einbauten), der Korngröße der partikulären Kontaktmasse und den Betriebsbedingungen im Wirbelschichtreaktor optimale Bereiche für die Herstellung von Chlorsilanen ergeben. Innerhalb dieser Bereiche ist die Produktivität des Verfahrens besonders hoch. Fig. 1 zeigt einen Wirbelschichtreaktor 1 zur Durchführung des erfindungsgemäßen Verfahrens. Das Reaktionsgas 2 wird vorzugsweise von unten und gegebenenfalls von der Seite (z.B. tangential oder orthogonal zum Gasstrom von unten) in die partikuläre Kontaktmasse eingeblasen, wodurch die Partikel der Kontaktmasse fluidisiert werden und eine Wirbelschicht 3 bilden. In der Regel wird zum Starten der Reaktion mittels einer außerhalb des Reaktors angeordneten Heizvorrichtung (nicht dargestellt) die Wirbelschicht 3 beheizt. Während des kontinuierlichen Betriebs ist üblicherweise kein Heizen erforderlich. Ein Teil der Partikel wird mit der Gasströmung aus der Wirbelschicht 3 in den Freiraum 4 oberhalb der Wirbelschicht 3 transportiert. Der Freiraum 4 ist durch eine sehr geringe Feststoffdichte gekennzeichnet, wobei diese in Richtung Reaktoraustritt abnimmt. Der Partikelanteil, der mit der Gasströmung den Reaktor verlässt, wird als Partikelaustrag 5 bezeichnet.

Untersuchungen zur Fluiddynamik in Wirbelschichtreaktoren haben ergeben, dass die Geometrie des Innenraums des Wirbelschichtreaktors maßgeblich die Fluiddynamik und damit auch die Produktivität beeinflusst. Unter Innenraum soll dabei der Bereich verstanden werden, der mit dem Reaktionsgas und/oder den Partikeln der Kontaktmasse in Berührung kommen kann (also beispielsweise sowohl der Freiraum als auch der Bereich, in dem sich die Wirbelschicht bildet). Die Geometrie des Innenraums wird neben allgemeinen konstruktiven Merkmalen wie Höhe, Breite, Form (z.B. Zylinder oder Konus) auch durch sich im Innenraum befindliche Einbauten bestimmt. Bei den Einbauten kann es sich insbesondere um Wärmetauschereinheiten, Versteifungsebenen, Zuführungen zum Einbringen des Reaktionsgases und Vorrichtungen zur Verteilung des Reaktionsgases (z.B. Gasverteilerplatten) handeln.

Die Geometrie des Reaktorinnenraums wirkt sich zum einen aus auf die Verweilzeit des Reaktionsgases, insbesondere von HCl, im Wirbelschichtreaktor und zum anderen auf den Austrag von Partikeln der Kontaktmasse aus dem Wirbelschichtreaktor.

So wurde gefunden, dass je höher die Verweilzeit und je homogener die Verteilung des Reaktionsgases im Reaktorinnenraum ist, desto mehr HCl wird umgesetzt. Damit geht eine Produktivitätssteigerung des Wirbelschichtreaktors einher. Grundsätzlich werden mit zunehmender Oberfläche der Einbauten die aufsteigenden Gasblasen abgebremst, wodurch die Verweilzeit des Gases steigt.

Ferner wurde gefunden, dass der Austrag an Kontaktmassepartikeln aus dem Wirbelschichtreaktor, der durch ein "Mitreißen" der Partikel mit dem Gasstrom erfolgt, abhängig ist von der Partikelgröße, der Füllhöhe im Wirbelschichtreaktor, der kontinuierlich zugeführten Reaktionsgasmenge (Gasgeschwindigkeit), dem Systemdruck sowie den Reaktoreinbauten. Die Füllhöhe stellt im Wesentlichen den Massenschwerpunkt der Wirbelschicht dar und ist abhängig von der Korngrößenverteilung der Partikel (feine Partikel entsprechen eher einer großen, grobe eher einer kleinen Ausdehnung der Wirbelschicht um den Massenschwerpunkt).

Die Produktivität des Wirbelschichtreaktors steigt grundsätzlich mit zunehmender Füllhöhe, mit zunehmender Gasgeschwindigkeit und mit abnehmender Korngröße der Kontaktmassepartikel (größere Reaktionsoberfläche).

Neben dem Einfluss der Einbauten auf die Verweilzeit des Reaktionsgases besteht ebenfalls ein Zusammenhang zwischen den Einbauten und dem Austrag an Kontaktmassepartikeln. Der Austrag wird dabei durch zwei Mechanismen beeinflusst. Zum einen werden die Gasblasen mit zunehmender Oberfläche der Einbauten abgebremst, so dass aus der Wirbelschicht weniger Partikel herausgeschleudert werden. Zum anderen werden vor allem größere Partikel im Freiraum aufgrund einer größeren Oberfläche der Einbauten abgebremst und somit in der Wirbelschicht gehalten. Die Produktivität des Wirbelschichtreaktors lässt sich daher durch eine gezielte Veränderungen der Einbauten, eine Erhöhung der Gasgeschwindigkeit und/oder eine Erhöhung der Füllhöhe oder eine Verringerung der Partikelgröße steigern.

Der Zusammenhang zwischen diesen Größen, die sich gegenseitig beeinflussen, kann mittels dimensionsloser Kennzahlen erfasst werden. Auf dieser Grundlage werden Arbeitsbereiche definiert, in denen Chlorsilane besonders wirtschaftlich in Wirbelschichtreaktoren hergestellt werden können.

Der Zusammenhang zwischen der Oberfläche der Einbauten, ausgedrückt durch den hydraulischen Anlagendurchmesser $d_{hyd}$, und den Betriebsparametern Gasleerrohrgeschwindigkeit $u_L$ sowie Sauterdurchmesser $d_{32}$ der Kontaktmassepartikel lässt sich in einem kartesischen Koordinatensystem mittels der beiden dimensionslosen Kennzahlen Archimedes-Zahl Ar und Reynolds-Zahl Re darstellen.

Die gemäß Gleichung 3 bestimmte Archimedes-Zahl Ar beschreibt den Einfluss des Sauterdurchmessers der Kontaktmassepartikel auf die Fluiddynamik in Wirbelschichtreaktoren. Der Sauterdurchmesser entspricht dem mittleren, volumengleichen Partikeldurchmesser der Körnung der Kontaktmasse.

Die nach Gleichung 4 bestimmte Reynolds-Zahl Re enthält die Gasleerrohrgeschwindigkeit $u_L$ im Wirbelschichtreaktor und damit die Menge an eingesetztem Reaktionsgas. Re stellt einen Zusammenhang zwischen $u_L$ und dem hydraulischen Anlagendurchmesser $d_{hyd}$ im Wirbelschichtreaktor her, wobei in $d_{hyd}$ gemäß Gleichung 5 der benetzte Umfang aller Einbauten einfließt.

Die Reynolds-Zahl Re kann konstant gehalten werden, wenn die Gasgeschwindigkeit (Gasleerrohrgeschwindigkeit) und somit der Volumenstrom an Reaktionsgas bei konstantem, freiem Strömungsquerschnitt (Reaktorquerschnitt) erhöht wird, und gleichzeitig der hydraulische Anlagendurchmesser $d_{hyd}$ durch eine Erhöhung der Oberfläche der Einbauten gesenkt wird. Der Volumenstrom kann durch einen Durchflussmesser (z.B. Schwebekörper-Durchflussmesser) in der Reaktionsgas-Zuleitung zum Reaktor bestimmt werden.

Auf Grundlage der aufgefundenen Zusammenhänge lässt sich anhand der dimensionslosen Kennzahlen Ar und Re ein Arbeitsbereich definieren, in dem die Chlorsilane besonders wirtschaftlich hergestellt werden können.

Dieser Arbeitsbereich entspricht in einem kartesischen Koordinatensystem, in welchem Ar gegen Re aufgetragen ist, einer Fläche, welche für das erste Verfahren durch die Gleichungen 1a und 1b mit einer Untergrenze Ar = 1 und einer Obergrenze Ar = 3000 definiert ist.

Für das erfindungsgemäße erste Verfahren ist dieser Arbeitsbereich in der Fig. 2 dargestellt.

Zu den dimensionslosen Kennzahlen:
Die dimensionslose Archimedes-Zahl Ar kann als Verhältnis zwischen Auftriebskraft und Reibungskraft interpretiert werden und dient dazu, das Verhalten von unterschiedlichen Körnungen (im vorliegenden Fall der Kontaktmasse) in Wirbelschichten zu charakterisieren.

Anhand der dimensionslosen Reynolds-Zahl Re kann der Strömungszustand eines Fluides beschrieben werden. Die Reynolds-Zahl kann als das Verhältnis von Trägheits- zu Zähigkeitskraft interpretiert werden. Als charakteristische Länge, die für die Definition der Reynolds-Zahl benötigt wird, wird der hydraulische Reaktor- bzw. Anlagendurchmesser $d_{hyd}$ verwendet und somit der Bezug zu den Einbauten im Reaktorinneren hergestellt.

Der hydraulische Anlagendurchmesser im Wirbelschichtreaktor $d_{hyd}$ [m] ist eine ingenieurtechnische Kennzahl, mit der sich strömungsmechanische Reibungs- und Oberflächeneffekte von Einbauten, Kanälen oder abweichenden Geometrien beschreiben lassen, indem diese auf einen äquivalenten Rohrdurchmesser zurückgeführt werden. Der hydraulische Durchmesser $d_{hyd}$ berechnet sich nach Gleichung 5, wobei $A_{q,\,frei}$ dem freien Strömungsquerschnitt [$m^2$] und $U_{ges}$, benetzt dem benetzten Umfang [m] jeweils aller Einbauten im Wirbelschichtreaktor entspricht. Der Innendurchmesser des Wirbelschichtreaktors und der Außendurchmesser der Einbauten können beispielsweise mittels Laser-Messungen/3D-Scans (z.B. ZEISS COMET L3D 2) erfasst werden.

Gemäß einer bevorzugten Ausführungsform des Verfahrens beträgt der hydraulische Anlagendurchmesser im Wirbelschichtreaktor $d_{hyd}$ 0,8 bis 1,7 m, bevorzugt 0,9 bis 1,6 m.

Ferner ist es bevorzugt, dass die Gasleerrohrgeschwindigkeit $u_L$ 0,06 bis 3 m/s, bevorzugt 0,07 bis 2 m/s, beträgt. Der Sauterdurchmesser $d_{32}$ der partikulären Kontaktmasse beträgt vorzugsweise 10 bis 480 $\mu$m, insbesondere 15 bis 450 $\mu$m.
Die Bestimmung der Korngrößenverteilung bzw. des Sauterdurchmessers $d_{32}$ kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen.

Bei der Kontaktmasse handelt es sich vorzugsweise um ein Gemisch aus Siliciumpartikeln. Insbesondere handelt es sich um Partikel aus Silicium, das vorzugsweise höchstens 5 Gew.-%, besonders bevorzugt höchstens 2 Gew.-%, insbesondere höchstens 1 Gew.-%, andere Elemente als Verunreinigungen enthält. Bevorzugt ist der Einsatz von Partikeln aus metallurgischem Silicium (mgSi), das üblicherweise eine Reinheit von 98% bis 99,9% aufweist. Typisch ist beispielsweise eine Zusammensetzung mit 98% Silicium, wobei sich die übrigen 2% in der Regel zum größten Teil aus den folgenden Elementen zusammensetzen: Fe, Ca, Al, Ti, Cu, Mn, Cr, V, Ni, Mg, B, C, P und O. Ferner können folgende Elemente enthalten sein: Co, W, Mo, As, Sb, Bi, S, Se, Te, Zr, Ge, Sn, Pb, Zn, Cd, Sr, Ba, Y und Cl.

Die genannten als Verunreinigung im Silicium vorliegenden Elemente weisen eine katalytische Aktivität auf. Daher ist bei dem Verfahren der Zusatz eines Katalysators grundsätzlich nicht erforderlich. Allerdings kann das Verfahren durch die Gegenwart zusätzlicher Katalysatoren positiv beeinflusst werden, insbesondere hinsichtlich seiner Selektivität. Bei dem Katalysator kann es sich insbesondere um ein oder mehrere Elemente aus der Gruppe mit Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl handeln. Vorzugsweise ist der Katalysator ausgewählt aus der Gruppe mit Fe, Al, Ca, Ni, Mn, Cu, Zn, Sn, C, V, Ti, Cr, B, P, O und Mischungen daraus. Wie bereits erwähnt sind diese katalytisch aktiven Elemente bereits in Silicium als Verunreinigung in einem bestimmten Anteil enthalten, beispielsweise in oxidischer oder metallischer Form, als Silicide oder in anderen metallurgischen Phasen. Ihr Anteil hängt von der Reinheit des verwendeten Siliciums ab. Grundsätzlich ist bei der Verwendung von mgSi oder Silicium geringerer Reinheit kein Katalysator mehr erforderlich.

Die Verwendung eines Katalysators ist bei dem Verfahren insbesondere dann angezeigt, wenn Reinstsilicium mit einer Reinheit > 99,99% eingesetzt wird, da hier der Anteil an katalytisch aktiven Verunreinigungen zu gering ist. Die Kontaktmasse kann in diesem Fall zur Bereitstellung zusätzlicher katalytisch aktiver Elemente neben Partikeln aus Reinstsilicium Partikel aus mgSi enthalten, beispielsweise in einem Anteil von bis zu 50 Gew.-%, bevorzugt 60 Gew.-%, besonders bevorzugt 70 Gew.-%, insbesondere 80 Gew.-%. Es kann allerdings auch Katalysator in metallischer bzw. legierter oder salzartiger Form der Kontaktmasse zugesetzt werden. Dabei kann es sich insbesondere um Chloride und/oder Oxide der katalytisch aktiven Elemente handeln. Bevorzugte Verbindungen sind CuCl, $CuCl_2$, CuO oder Mischungen daraus.

Die Kontaktmasse kann ferner Promotoren enthalten, beispielsweise Zn und/oder Zinkchlorid.

Vorzugsweise enthält das Reaktionsgas mindestens 50 Vol.-%, bevorzugt mindestens 70 Vol.-%, besonders bevorzugt mindestens 90 Vol.-%, HCl. Neben HCl kann das Reaktionsgas ferner ein oder mehrere Komponenten ausgewählt aus der Gruppe mit $H_2$, $H_nSiCl_{4-n}$ (n = 0-4), $H_mCl_{6-m}Si_2$ (m = 0-6), $H_qCl_{6-q}Si_2O$ (q = 0-4), $CH_4$, $C_2H_6$, CO, $CO_2$, $O_2$, $N_2$ enthalten. Diese Komponenten können beispielsweise aus in einem Verbund zurückgewonnenem HCl stammen.

Das Reaktionsgas kann ferner ein Trägergas enthalten, beispielsweise Stickstoff oder ein Edelgas wie Argon.

Ferner kann dem Reaktionsgas Wasserstoff zugesetzt werden, insbesondere um die Gleichgewichtslage der Reaktion zu beeinflussen. Wasserstoff kann auch als Verunreinigung in zurückgewonnenem HCl enthalten sein.

Die Bestimmung der Zusammensetzung des Reaktionsgases erfolgt üblicherweise vor der Zuleitung zum Reaktor über Raman- und Infrarotspektroskopie sowie Gaschromatographie. Dies kann sowohl über stichprobenartig entnommene Proben und anschließende "offline-Analysen" als auch über in das System eingebundene "online"-Analysengeräte erfolgen.

Der absolute Druck im Wirbelschichtreaktor, bei welchem das erfindungsgemäße Verfahren vorzugsweise durchgeführt wird, beträgt 0,1 bis 1 MPa, bevorzugt 0,13 bis 0,7 MPa, besonders bevorzugt 0,15 bis 0,5 MPa.

Das Verfahren wird vorzugsweise in einem Temperaturbereich von 280 bis 400°C, besonders bevorzugt 320 bis 380°C, insbesondere 340 bis 360°C, durchgeführt.

Diese Anmeldung offenbart auch ein zweites Verfahren, das nicht Teil der Erfindung ist. In diesem zweiten Verfahren wird zur Herstellung von Chlorsilanen in einem Wirbelschichtreaktor durch Umsetzung von einem Reaktionsgas, enthaltend Siliciumtetrachlorid (STC) und Wasserstoff, mit einer partikulären Kontaktmasse, enthaltend Silicium und einen Katalysator, wobei die Chlorsilane die allgemeinen Formel $H_nSiCl_{4-n}$ und/oder $H_mCl_{6-m}Si_2$ mit n = 1-4 und m = 0-4 aufweisen. Bei diesem zweiten Verfahren handelt es sich insbesondere um eine Niedertemperaturkonvertierung, die durch die Reaktionsgleichung (2) beschrieben ist.

Bei dem zweiten Verfahren werden der hydraulische Durchmesser des Wirbelschichtreaktors $d_{hyd}$, die Gasleerrohrgeschwindigkeit im Wirbelschichtreaktor $u_L$ und der Sauterdurchmesser der partikulären Kontaktmasse $d_{32}$ derart gewählt, dass in einem kartesischen Koordinatensystem, in welchem die Archimedes-Zahl Ar gegen die Reynolds-Zahl Re aufgetragen ist, Punkte auf einer Fläche abgebildet werden, wobei die Fläche definiert wird durch die Gleichungen 2a und 2b:

$$Ar = 5 \cdot 10^{-9} \cdot Re^2 + 4{,}8 \cdot 10^{-3} \cdot Re - 102 \qquad (2a)$$

$$Ar = 1 \cdot 10^{-9} \cdot Re^2 - 1{,}1 \cdot 10^{-2} \cdot Re + 10774 \qquad (2b)$$

mit einer Untergrenze Ar = 0,3 und einer Obergrenze Ar = 3000.

Hinsichtlich der Definitionen für Ar und Re kann auf die obigen Ausführungen verwiesen werden. Entsprechendes gilt in Bezug auf die Zusammenhänge zwischen $d_{hyd}$, $d_{32}$ und $u_L$, welche sich mittels der dimensionslosen Kennzahlen Ar und Re erfassen lassen.

Auch für das zweite Verfahren lässt sich mit den Kennzahlen Ar und Re ein Arbeitsbereich definieren, in dem die Chlorsilane besonders wirtschaftlich herstellbar sind.

Dieser Arbeitsbereich entspricht in einem kartesischen Koordinatensystem, in welchem Ar gegen Re aufgetragen ist, einer Fläche, welche für das zweite Verfahren durch die Gleichungen 2a und 2b mit einer Untergrenze Ar = 0,3 und einer Obergrenze Ar = 3000 definiert ist.

Für das zweite Verfahren ist dieser Arbeitsbereich in der Fig. 3 dargestellt.

Das zweite Verfahren lässt sich ebenfalls in einem gemäß Fig. 1 beschriebenen Wirbelschichtreaktor durchführen.

Im Unterschied zu dem erfindungsgemäßen Verfahren erfolgt die Umsetzung der Kontaktmasse mit STC und Wasserstoff, wobei zwingend ein Katalysator zugesetzt werden muss. Hier entsteht zunächst durch eine Reaktion zwischen STC und Wasserstoff HCl, welcher dann mit der Silicium enthaltenden Kontaktmasse zu Chlorsilanen der oben angegebenen allgemeinen Formeln weiterreagiert. HCl wird hier in situ erzeugt und nicht wie bei dem ersten Verfahren direkt in den Reaktor eingebracht.

Bei den mit den beiden Verfahren hergestellten Chlorsilanen handelt es sich vorzugsweise um Monochlorsilan, Dichlorsilan und/oder TCS, insbesondere TCS. Bevorzugt hergestellte Disilane sind $Si_2Cl_6$ und/oder $HSi_2Cl_5$, insbesondere $Si_2Cl_6$.

Gemäß einer bevorzugten Ausführungsform des zweiten Verfahrens beträgt der hydraulische Anlagendurchmesser im Wirbelschichtreaktor $d_{hyd}$ 0,1 bis 24 m, bevorzugt 0,15 bis 10 m, besonders bevorzugt 0,2 bis 5 m.

Ferner ist es bevorzugt, dass die Gasleerrohrgeschwindigkeit $u_L$ 0,05 bis 0,6 m/s, bevorzugt 0,055 bis 0,55 m/s, besonders bevorzugt 0,06 bis 0,5 m/s, beträgt.

Der Sauterdurchmesser $d_{32}$ der partikulären Kontaktmasse beträgt genau wie bei dem erfindungsgemäßen Verfahren 5 bis 500 µm, bevorzugt 10 bis 480 µm, insbesondere 15 bis 450 µm.

Bezüglich der Eigenschaften der Kontaktmasse kann auf die Ausführungen zu dem erfindungsgemäßen Verfahren verwiesen werden.

Auch hinsichtlich der Art des Katalysators kann auf die obigen Ausführungen verwiesen werden. Allerdings ist für das zweite Verfahren der üblicherweise in dem verwendeten Silicium enthaltene Anteil (entsprechend der Reinheit des Siliciums) an katalytisch aktiven Elementen nicht ausreichend, so dass der Kontaktmasse unabhängig von der Reinheit des eingesetzten Siliciums ein Katalysator zugesetzt werden muss. Vorzugsweise handelt es sich bei dem Katalysator um Chloride und/oder Oxide der katalytisch aktiven Metalle/Elemente. Bevorzugte Verbindungen sind CuCl,

$CuCl_2$, CuO.

Vorzugsweise ist der Katalysator bezogen auf Silicium in einem Anteil von 0,1 bis 20 Gew.-%, bevorzugt 0,5 bis 15 Gew.-%, besonders bevorzugt 0,8 bis 10 Gew.-%, insbesondere 1 bis 5 Gew.-%, in der Kontaktmasse enthalten.

Gemäß einer bevorzugten Ausführungsform des zweiten Verfahrens enthält das Reaktionsgas mindestens 50 Vol.-%, bevorzugt mindestens 60 Vol.-%, besonders bevorzugt mindestens 70 Vol.-%, Wasserstoff und STC.

Vorzugsweise liegen Wasserstoff und STC in einem Molverhältnis von 1:1 bis 10:1, bevorzugt 1:1 bis 6:1, besonders bevorzugt 1:1 bis 4:1, vor.

Gemäß einer weiteren Ausführungsform des zweiten Verfahrens kann das Reaktionsgas HCl und/oder $Cl_2$ enthalten. Dadurch kann eine exotherme Reaktionsführung ermöglicht werden, was mit einem sinkenden Energiebedarf einhergeht. Insbesondere können pro Mol im Reaktionsgas enthaltenem Wasserstoff 0,01 bis 1 Mol HCl und/oder 0,01 bis 1 Mol $Cl_2$ enthalten sein.

Enthält das Reaktionsgas neben Wasserstoff und STC HCl, ist es grundsätzlich möglich das Verfahren ohne die Anwesenheit eines zusätzlichen Katalysators durchzuführen. Beispielsweise kann so auch Reinstsilicium (Reinheit > 99,99%) ohne einen zusätzlichen Katalysator umgesetzt werden. Dies ist mit dem erfindungsgemäßen Verfahren generell nicht möglich, da dieses in der Regel bei niedrigeren Temperaturen durchgeführt wird.

Ferner kann das Reaktionsgas ein oder mehrere Komponenten ausgewählt aus der Gruppe mit $H_nSiCl_{4-n}$ (n = 0-4), $H_mCl_{6-m}Si_2$ (m = 0-6), $H_qCl_{6-q}Si_2O$ (q = 0-4), $CH_4$, $C_2H_6$, CO, $CO_2$, $O_2$, $N_2$ enthalten. Diese Komponenten können beispielsweise aus in einem Verbund zurückgewonnenem Wasserstoff stammen.

Vorzugsweise wird das zweite Verfahren bei einem absoluten Druck im Wirbelschichtreaktor von 0,2 bis 4 MPa, bevorzugt 0,3 bis 3 MPa, besonders bevorzugt 0,5 bis 2,5 MPa, durchgeführt.

Der Temperaturbereich, in welchem das zweite Verfahren vorzugsweise durchgeführt wird beträgt 350 bis 850°C, besonders bevorzugt 400 bis 750°C, insbesondere 500 bis 700°C.

Die vorstehend beschriebenen Verfahren sind bevorzugt in einen Verbund zur Herstellung von polykristallinem Silicium eingebunden. Der Verbund umfasst vorzugsweise folgende Prozesse: Erzeugung von TCS mittels des erfindungsgemäßen oder des zweiten Verfahrens, Aufreinigung des erzeugten TCS zu TCS mit Halbleiterqualität, Abscheidung von polykristallinem Silicium, bevorzugt nach dem Siemens-Verfahren oder als Granulat, Recycling des bei der Herstellung des polykristallinen Silicium anfallenden STC, bevorzugt durch Anwendung des zweiten Verfahrens oder Recycling des STC über Rückspeisung in die Erzeugung von TCS gemäß der Reaktionsgleichung (3) (Hochtemperaturkonvertierung).

**Beispiele:**

Experimente in Technikumsreaktoren:

Bei Technikumsreaktoren handelt sich um Reaktoren kleineren Maßstabs. Der Druck in diesen Reaktoren betrug 0,10 MPa (absolut) und die Temperatur 20°C. Grundsätzlich wird das Wirbelschichtverhalten maßgeblich von Korngröße, Korngrößenverteilung, Gasgeschwindigkeit und Strömungsquerschnitt beeinflusst.

Der oben beschriebene Zusammenhang zwischen Einbauten, Körnungen und Partikelaustrag wurde zunächst ohne chemische Reaktion in einer Technikumswirbelschicht nachgewiesen. Dabei hat sich gezeigt, dass ein exponentieller Zusammenhang zwischen dem hydraulischen Reaktor- bzw. Anlagendurchmesser $d_{hyd}$ und dem Partikelaustrag besteht. Dieser Zusammenhang wurde für unterschiedliche Einbauten und Partikelgrößenverteilungen gemessen und bestätigt.

Erhöhung der Produktivität von Wirbelschichtreaktoren durch Absenken des hydraulischen Durchmessers $d_{hyd}$ bei bestehenden Reaktoren:

Durch Absenkung des hydraulischen Anlagendurchmessers $d_{hyd}$ (durch zusätzliche flächige Einbauten und Wärmetauscherrohre) wird der Partikelaustrag aus dem Reaktor zunächst reduziert. Durch den so gewonnenen Spielraum beim Partikelaustrag kann die Gasgeschwindigkeit erhöht werden. In den durch die Gleichungen 1a, 1b und 2a, 2b definierten Arbeitsbereichen steigt so die Produktivität.

Erhöhung der Produktivität von bestehenden Wirbelschichtreaktoren durch Reduzierung des Sauterdurchmessers $d_{32}$ der zugegebenen Silicium-Partikel:

Eine geringerer Sauterdurchmessers $d_{32}$ hat einen höheren Partikelaustrag aus dem Reaktor zur Folge. Dieser kann wiederum durch Reduzierung des hydraulischen Anlagendurchmessers $d_{hyd}$ gesenkt werden, so dass eine produktivere Körnung mit größerer Oberfläche (kleinerer $d_{32}$) eingesetzt werden kann. Silicium-Verluste werden so reduziert.

Auslegung neuer Wirbelbettreaktoren:

Unter Beachtung der oben genannten Erkenntnisse können neue Synthesereaktoren optimal hinsichtlich ihrer Dimensionierung, ihrer Einbauten und der Betriebseinstellungen an eine bestimmte Kontaktmassenkörnung angepasst werden. Optimale Kombinationen dieser Parameter liegen in der gekennzeichneten Fläche (Arbeitsbereich) gemäß den Fig. 2 erfindungsgemäßes Verfahren) und 3 (zweites Verfahren).

Experimente unter Produktionsbedingungen:

Um die gewonnen Erkenntnisse und Zusammenhänge auf die Produktivität bei der Herstellung von Chlorsilanen zu übertragen und um die oben genannten Grenzen der Einflussgrößen (Arbeitsbereiche) zu definieren, wurden eingehende Untersuchungen an kontinuierlich betriebenen Wirbelschichtreaktoren unterschiedlicher Größe durchgeführt.

Für beide Verfahren erfindungsgemäßes Verfahren: Hydrochlorierung und zweites Verfahren: Niedertemperaturkonvertierung) wurden verschiedene Experimente V durchgeführt (Tabelle 1: V1 bis V22 für die Hydrochlorierung und Tabelle 2: V1 bis V19 für die Niedertemperaturkonvertierung), wobei jeweils der hydraulische Anlagendurchmesser $d_{hyd}$ zwischen 0,7 m und 1,8 m (Hydrochlorierung) bzw. 0,1 m und 24 m (Niedertemperaturkonvertierung), die Gasleerrohrgeschwindigkeit $u_L$ zwischen 0,05 m/s und 4 m/s (Hydrochlorierung) bzw. 0,05 m/s und 0,6 m/s (Niedertemperaturkonvertierung), sowie der Partikel-Sauterdurchmesser $d_{32}$ zwischen 5 $\mu$m und 500 $\mu$m (Hydrochlorierung und Niedertemperaturkonvertierung) variiert wurden. In der Regel kann die Partikelfeststoffdichte $\rho_P$ näherungsweise als konstant angesehen werden. Die Fluiddichte $\rho_F$ und die kinematische Viskosität $\nu_F$ können durch Simulationen von (Phasen-)Gleichgewichtszuständen unter Verwendung einer verfahrenstechnischen Software ermittelt werden. Diese Simulationen basieren üblicherweise auf angepassten Zustandsgleichungen, die sich bei variierenden physikalischen Parametern (z.B. p und T) auf real gemessene Zusammensetzungen des Reaktionsgemisches sowohl in der Gas- als auch in der Flüssigphase stützen. Dieses Simulationsmodell kann anhand realer Betriebszustände/-parameter validiert werden und ermöglicht so die Festlegung von Betriebsoptima hinsichtlich der Parameter $\rho_F$ und $\nu_F$.

Die Bestimmung von Phasengleichgewichten kann beispielsweise mit einer Messapparatur erfolgen (z.B. modifizierte Umlaufapparatur nach Röck und Sieg, bspw. MSK Baraton Typ 690, MSK Instruments). Dabei werden für ein Stoffgemisch durch Variation von physikalischen Einflussgrößen wie Druck und Temperatur Aggregatzustandsänderungen hervorgerufen. Daraufhin werden die verschiedenen Aggregatzustände analysiert und die Komponentenzusammensetzung bestimmt, beispielsweise mit einem Gaschromatograph. Über rechnergestützte Modellierung können Zustandsgleichungen angepasst werden, um die Phasengleichgewichte zu beschreiben. Die Daten werden in verfahrenstechnische Softwareprogramme übertragen, so dass Phasengleichgewichte berechnet werden können.

Die Viskosität ist ein Maß für die Impulsübertragung quer zur Strömungsrichtung in einem bewegten Fluid. Dabei kann die kinematische Viskosität $\nu_F$ über die dynamische Viskosität und die Fluiddichte beschrieben werden. Die Dichte kann für Flüssigkeiten beispielsweise über die Rackett-Gleichung angenähert werden, für Gase kann eine Annäherung über eine Zustandsgleichung, z.B. Peng-Robinson, erfolgen. Die Messung der Dichte kann mit einem digitalen Dichtemessgerät (z.B. DMA 58, Fa. Anton Paar) unter Verwendung der Biegeschwingermethode (Eigenfrequenzmessung) durchgeführt.

Die Fluiddichte $\rho_F$ liegt üblicherweise in einem Bereich von 1,5 bis 5 kg/m$^3$. Die kinematische Viskosität $\nu_F$ liegt üblicherweise in einem Bereich von $3{\cdot}10^{-6}$ bis $2{,}5{\cdot}10^{-5}$ m$^2$/s.

Aus den gewählten Parametern $d_{hyd}$, $u_L$ und $d_{32}$ ergaben sich die Archimedes-Zahl Ar und die Reynolds-Zahl Re. Zur Bewertung der ausgewählten Kombinationen aus Re und Ar wurde die Produktivität [kg/(kg*h)], also die produzierte Menge an Chlorsilanen pro Stunde [kg/h], bezogen auf die im Reaktor eingesetzte Menge an Kontaktmasse [kg], zu Grunde gelegt. Als optimal bzw. akzeptabel gilt für beide Verfahren eine Produktivität von > 0,01 kg/(kg*h).

Die Resultate für die Hydrochlorierung sind in der Tabelle 1, die für die Niedertemperaturkonvertierung in der Tabelle 2 dargestellt. In den Diagrammen der Fig. 4 (Hydrochlorierung) und 5 (Niedertemperaturkonvertierung) sind die in den Experimenten V ermittelten Zahlenwerte für Re gegen die ermittelten Zahlenwerte für Ar gemäß den Tabellen 1 und 2 aufgetragen.

Die Kreise in Fig. 4 (Hydrochlorierung) kennzeichnen die Experimente V1-V18, die zu einer Produktivität von mehr als 0,01 kg/(kg*h) führten. Die als Dreiecke dargestellten Messergebnisse kennzeichnen die Experimente V19-V22, die zu einer Produktivität von weniger als 0,01 kg/(kg*h) führten.

Entsprechend kennzeichnen die Rauten in der Fig. 5 (Niedertemperaturkonvertierung) die Experimente V1-V16, die zu einer Produktivität von mehr als 0,01 kg/(kg*h) führten und die Quadrate die Experimente V17-V20, die zu einer Produktivität von weniger als 0,01 kg/(kg*h) führten.

Die Arbeitsbereiche, die auch in den Fig. 2 und 3 dargestellt sind, wurden anhand dieser Experimente festgelegt.

Tabelle 1: Hydrochlorierung (erfindungsgemäßes Verfahren)

| Exp. | *Re* | *Ar* | Produktivität [kg/(kg*h)] |
|---|---|---|---|
| V1 | 3600 | 329 | 0,065 |
| V2 | 112000 | 329 | 0,053 |
| V3 | 3200 | 12 | 0,035 |
| V4 | 20000 | 17 | 0,41 |
| V5 | 140000 | 12 | 0,15 |
| V6 | 120000 | 328,7 | 0,051 |
| V7 | 60000 | 12 | 0,23 |
| V8 | 28000 | 14 | 0,35 |
| V9 | 28000 | 215 | 0,53 |
| V10 | 51429 | 439 | 0,62 |
| V11 | 100000 | 716 | 0,04 |
| V12 | 42667 | 95 | 0,25 |
| V13 | 72000 | 859 | 0,06 |
| V14 | 3600 | 2284 | 0,039 |
| V15 | 112000 | 1014 | 0,032 |
| V16 | 30000 | 1,24 | 0,017 |
| V17 | 51429 | 1,49 | 0,015 |
| V18 | 40000 | 1,24 | 0,016 |
| V19 | 1400 | 97 | < 0,01 |
| V20 | 1400 | 329 | < 0,01 |
| V21 | 200000 | 770,8 | < 0,01 |
| V22 | 28000 | 0,73 | < 0,01 |

Tabelle 2: Niedertemperaturkonvertierung (zweites nicht erfindungsgemäßes Verfahren)

| Exp. | *Re* | *Ar* | Produktivität [kg/(kg*h)] |
|---|---|---|---|
| V1 | 680000 | 195 | 0,1 |
| V2 | 544000 | 429 | 0,13 |
| V3 | 400000 | 80 | 0,39 |
| V4 | 266667 | 16 | 0,22 |
| V5 | 166667 | 30 | 0,33 |
| V6 | 800000 | 851 | 0,044 |
| V7 | 793333 | 993 | 0,055 |
| V8 | 166667 | 126 | 0,44 |
| V9 | 666667 | 993 | 0,066 |
| V10 | 66667 | 5 | 0,11 |
| V11 | 800000 | 993 | 0,033 |
| V12 | 113333 | 5 | 0,165 |
| V13 | 466667 | 993 | 0,013 |
| V14 | 251852 | 0,39 | 0,011 |
| V15 | 1000000 | 3,50 | 0,011 |
| V16 | 111111 | 0,39 | 0,012 |
| V17 | 111111 | 5401 | < 0,01 |
| V18 | 2266667 | 32 | < 0,01 |
| V19 | 111111 | 0,04321 | < 0,01 |
| V20 | 18133 | 5 | < 0,01 |

Die Bereichsgrenze für niedrige Reynolds-Zahlen Re (Gleichungen 1a und 2a) ist dadurch gekennzeichnet, dass Kombinationen aus geringer Gasleerrohrgeschwindigkeit $u_L$ und/oder sehr geringem hydraulischen Reaktordurchmesser $d_{hyd}$ ($d_{hyd}$ ca. 0,7 für Hydrochlorierung und 0,1 für Niedertemperaturkonvertierung) zu einer abnehmenden Produktivität führen. Die Produktivität sinkt auch mit zunehmendem Partikel-Sauterdurchmesser $d_{32}$ (und damit größerer Ar), da für gröbere Körnungen der Kontaktmasse höhere Gasgeschwindigkeiten für die Fluidisierung benötigt werden. Dies ist anhand des Kurvenverlaufs (Gleichungen 1a und 2a, Fig. 4 und 5) zu erkennen.

Die Bereichsgrenze für hohe Reynolds-Zahlen Re (Gleichungen 1b und 2b) ist durch sehr hohe Gasleerrohrgeschwindigkeiten $u_L$ gekennzeichnet, so dass beispielsweise der Partikelaustrag nicht mehr durch Anpassung des hydraulischen Reaktordurchmessers $d_{hyd}$ kompensiert werden kann. Auch hier ist zu erkennen, dass für gröbere Partikel (große Ar und $d_{32}$) ein vergleichsweise weiter Bereich für Re angegeben werden kann, da sich beispielsweise der Partikelaustrag erst bei einer Kombinationen von höherer Gasleerrohrgeschwindigkeit $u_L$ und hydraulischem Reaktordurchmesser $d_{hyd}$ negativ auf die Produktivität auswirkt.

Die Untergrenzen des Arbeitsbereichs (vgl. Fig. 4: Hydrochlorierung und 5: Niedertemperaturkonvertierung) bei Ar = 1 bzw. Ar = 0,3 (sehr feine Körnungen, also kleiner $d_{32}$) resultieren zum einen daraus, dass der Partikelaustrag durch Reduktion des hydraulischen Anlagendurchmessers $d_{hyd}$ nicht mehr ausreichend durch eine Variation von $u_L$ kompensiert werden kann. Dies hat einen unwirtschaftlichen Anlagenbetrieb zur Folge. Zum anderen sind bei Ar < 1 bzw. Ar < 0,3 die Grenzen einer effektiven Fluidisierbarkeit der Kontaktmasse erreicht, so dass aufgrund eines verringerten Kontakts zwischen Kontaktmasse und Reaktionsgas die Produktivität sinkt.

Die Obergrenze von Ar = 3000 und darüber entspricht gröberen Körnungen (großer $d_{32}$), welche zum einen eine vergleichsweise hohe Fluidisierungsgeschwindigkeit (Gasleerrohrgeschwindigkeit) benötigen und zum anderen aufgrund der geringeren spezifischen Partikeloberfläche den wirtschaftlichen Bereich hoher Produktivität verlassen.

## Patentansprüche

1. Verfahren zur Herstellung von Chlorsilanen in einem Wirbelschichtreaktor durch Umsetzung von einem Chlorwasserstoff enthaltenden Reaktionsgas mit einer partikulären Kontaktmasse, enthaltend Silicium und gegebenenfalls einen Katalysator, wobei die Chlorsilane die allgemeinen Formel $H_nSiCl_{4-n}$ und/oder $H_mCl_{6-m}Si_2$ mit n = 1-4 und m = 0-4 aufweisen und wobei der hydraulische Durchmesser $d_{hyd}$ des Wirbelschichtreaktors, die Gasleerrohrgeschwindigkeit $u_L$ im Wirbelschichtreaktor und der Sauterdurchmesser $d_{32}$ der partikulären Kontaktmasse derart gewählt werden, dass in einem kartesischen Koordinatensystem, in welchem die Archimedes-Zahl Ar gegen die Reynolds-Zahl Re aufgetragen ist, Punkte auf einer Fläche abgebildet werden, wobei die Fläche definiert wird durch die Gleichungen 1a und 1b:

$$Ar = 3 \cdot 10^{-3} \cdot Re^2 - 8{,}18 \cdot Re + 1200 \quad (1a)$$

$$Ar = 4 \cdot 10^{-6} \cdot Re^2 - 0{,}69 \cdot Re + 14400 \quad (1b)$$

mit einer Untergrenze Ar = 1 und einer Obergrenze Ar = 3000,
wobei Ar durch Gleichung 3

$$Ar = g \cdot \frac{{d_{32}}^3}{{v_F}^2} \cdot \frac{\rho_P - \rho_F}{\rho_F} \quad (3)$$

bestimmt wird und

$g$ die Erdbeschleunigung [m/s$^2$],
$d_{32}$ den Partikel-Sauterdurchmesser [m],
$\rho_p$ die Partikelfeststoffdichte [kg/m$^3$],
$\rho_F$ die Fluiddichte [kg/m$^3$],
$v_F$ die kinematische Viskosität des Fluides [m$^2$/s]

bedeuten,
wobei Re durch Gleichung 4

$$Re = \frac{u_L \cdot d_{hyd}}{v_F} \qquad (4)$$

bestimmt wird und

$u_L$ die Gasleerrohrgeschwindigkeit [m/s] und
$d_{hyd}$ der hydraulische Durchmesser [m] bedeuten,

wobei $d_{hyd}$ durch Gleichung 5

$$d_{hyd} = \frac{4 * A_{q,frei}}{U_{ges,benetzt}} \qquad (5)$$

bestimmt wird und

$A_{q, frei}$ dem freien Strömungsquerschnitt [m²] im Wirbelschichtreaktor und
$U_{ges, benetzt}$ dem benetzten Umfang [m] jeweils aller Einbauten im Wirbelschichtreaktor entsprechen,

wobei $d_{hyd}$ 0,7 bis 1,8 m, $u_L$ 0,05 bis 4 m/s und $d_{32}$ 5 bis 500 μm beträgt.

2. Verfahren nach Anspruch 1, **dadurch gekennzeichnet, dass** $d_{hyd}$ 0,8 bis 1,7 m, bevorzugt 0,9 bis 1,6 m, beträgt.

3. Verfahren nach Anspruch 1 oder 2, **dadurch gekennzeichnet, dass** $u_L$ 0,06 bis 3 m/s, bevorzugt 0,07 bis 2 m/s, beträgt.

4. Verfahren nach einem der vorhergehenden Ansprüche, **dadurch gekennzeichnet, dass** das Reaktionsgas mindestens 50 Vol.-%, bevorzugt mindestens 70 Vol.-%, besonders bevorzugt mindestens 90 Vol.-%, Chlorwasserstoff enthält.

5. Verfahren nach einem der vorhergehenden Ansprüche, **dadurch gekennzeichnet, dass** der absolute Druck im Wirbelschichtreaktor 0,1 bis 1 MPa, bevorzugt 0,13 bis 0,7 MPa, besonders bevorzugt 0,15 bis 0,5 MPa, beträgt.

6. Verfahren nach einem der vorhergehenden Ansprüche, **dadurch gekennzeichnet, dass** der Katalysator ausgewählt ist aus der Gruppe mit Fe, Al, Ca, Ni, Mn, Cu, Zn, Sn, C, V, Ti, Cr, B, P, O und Mischungen daraus.

7. Verfahren nach einem der vorhergehenden Ansprüche, **dadurch gekennzeichnet, dass** der Katalysator bezogen auf Silicium in einem Anteil von 0,1 bis 20 Gew.-%, bevorzugt 0,5 bis 15 Gew.-%, besonders bevorzugt 0,8 bis 10 Gew.-%, insbesondere 1 bis 5 Gew.-%, enthalten ist.

8. Verfahren nach einem der vorhergehenden Ansprüche, **dadurch gekennzeichnet, dass** $d_{32}$ 10 bis 480 μm, bevorzugt 15 bis 450 μm, beträgt.

## Claims

1. Process for preparing chlorosilanes in a fluidized-bed reactor by reaction of a hydrogen chloride-containing reaction gas with a particulate contact composition containing silicon and optionally a catalyst, wherein the chlorosilanes have the general formula $H_nSiCl_{4-n}$ and/or $H_mCl_{6-m}Si_2$ where n = 1-4 and m = 0-4 and wherein the hydraulic diameter $d_{hyd}$ of the fluidized-bed reactor, the superficial velocity of the gas $u_L$ in the fluidized-bed reactor and the Sauter diameter $d_{32}$ of the particulate contact composition are selected so that points are imaged on an area in a cartesian coordinate system in which the Archimedes number Ar is plotted against the Reynolds number Re, where the area is defined by the equations 1a and 1b:

$$Ar = 3 \cdot 10^{-3} \cdot Re^2 - 8.18 \cdot Re + 1200 \qquad (1a)$$

$$Ar = 4 \cdot 10^{-6} \cdot Re^2 - 0.69 \cdot Re + 14400 \qquad (1b)$$

with a lower limit Ar = 1 and an upper limit Ar = 3000, where Ar is determined by means of equation 3

$$Ar = g \cdot \frac{d_{32}^{3}}{\upsilon_F^2} \cdot \frac{\rho_P - \rho_F}{\rho_F} \qquad (3)$$

and

g is the acceleration due to gravity [$m/s^2$],
$d_{32}$ is the Sauter diameter of the particles [m],
$\rho_p$ is the solids density of the particles [$kg/m^3$],
$\rho_F$ is the fluid density [$kg/m^3$],
$\nu_F$ is the kinematic viscosity of the fluid [$m^2/s$],

where Re is determined by means of equation 4

$$Re = \frac{u_L \cdot d_{hyd}}{\upsilon_F} \qquad (4)$$

and
$u_L$ is the superficial velocity of the gas [m/s] and $d_{hyd}$ is the hydraulic diameter [m], where $d_{hyd}$ is determined by means of equation 5

$$d_{hyd} = \frac{4 * A_{q,free}}{U_{total,wetted}} \qquad (5)$$

and

$A_{q,\,free}$ corresponds to the free flow cross section [$m^2$] in the fluidized-bed reactor and
$U_{total,\,wetted}$ corresponds to the wetted perimeter [m] of all internals in the fluidized-bed reactor,

where $d_{hyd}$ is from 0.7 to 1.8 m, $u_L$ is from 0.05 to 4 m/s and $d_{32}$ is from 5 to 500 μm.

**2.** Process according to Claim 1, **characterized in that** $d_{hyd}$ is from 0.8 to 1.7 m, preferably from 0.9 to 1.6 m.

**3.** Process according to Claim 1 or 2, **characterized in that** $u_L$ is from 0.06 to 3 m/s, preferably from 0.07 to 2 m/s.

**4.** Process according to any of the preceding claims, **characterized in that** the reaction gas contains at least 50% by volume, preferably at least 70% by volume, particularly preferably at least 90% by volume, of hydrogen chloride.

**5.** Process according to any of the preceding claims, **characterized in that** the absolute pressure in the fluidized-bed reactor is from 0.1 to 1 MPa, preferably from 0.13 to 0.7 MPa, particularly preferably from 0.15 to 0.5 MPa.

**6.** Process according to any of the preceding claims, **characterized in that** the catalyst is selected from the group consisting of Fe, Al, Ca, Ni, Mn, Cu, Zn, Sn, C, V, Ti, Cr, B, P, O and mixtures thereof.

**7.** Process according to any of the preceding claims, **characterized in that** the catalyst is present in a proportion of from 0.1 to 20% by weight, preferably from 0.5 to 15% by weight, particularly preferably from 0.8 to 10% by weight, in particular from 1 to 5% by weight, based on silicon.

**8.** Process according to any of the preceding claims, **characterized in that** $d_{32}$ is from 10 to 480 μm, preferably from 15 to 450 μm.

**Revendications**

1. Procédé pour la préparation de chlorosilanes dans un réacteur à couche tourbillonnante par transformation d'un gaz de réaction contenant du chlorure d'hydrogène avec une masse de contact particulaire, contenant du silicium et éventuellement un catalyseur, les chlorosilanes présentant la formule générale $H_nSiCl_{4-n}$ et/ou $H_mCl_{6-m}Si_2$ avec n = 1 à 4 et m = 0 à 4 et le diamètre hydraulique $d_{hyd}$ du réacteur à couche tourbillonnante, la vitesse du gaz en tube vide $u_L$ dans le réacteur à couche tourbillonnante et le diamètre de Sauter $d_{32}$ de la masse de contact particulaire étant choisis de telle manière que dans un système de coordonnées cartésien, dans lequel le nombre d'Archimède Ar est appliqué en fonction par rapport au nombre de Reynolds Re, des points sont représentés sur une surface, la surface étant définie par les équations 1a et 1b :

$$Ar = 3 \cdot 10^{-3} \cdot Re^2 - 8{,}18 \cdot Re + 1200 \quad (1a)$$

$$Ar = 4 \cdot 10^{-6} \cdot Re^2 - 0{,}69 \cdot Re + 14400 \quad (1b)$$

avec une limite inférieure Ar = 1 et une limite supérieure Ar = 3 000,
Ar étant déterminé par l'équation 3

$$Ar = g \cdot \frac{d_{32}{}^3}{\upsilon_F{}^2} \cdot \frac{\rho_P - \rho_F}{\rho_F} \quad (3)$$

et

g signifiant l'accélération terrestre [$m/s^2$],
$d_{32}$ signifiant le diamètre de Sauter des particules [m],
$\rho_p$ signifiant la masse volumique des particules [$kg/m^3$]
$\rho_F$ signifiant la densité du fluide [$kg/m^3$],
$U_F$ signifiant la viscosité cinématique du fluide [$m^2/s$],
Re étant déterminé par l'équation 4

$$Re = \frac{u_L \cdot d_{hyd}}{\upsilon_F} \quad (4)$$

et
$u_L$ signifiant la vitesse du gaz en tube vide [m/s] et
$d_{hyd}$ signifiant le diamètre hydraulique [m],
$d_{hyd}$ étant déterminé par l'équation 5

$$d_{hyd} = \frac{4 * A_{s,libre}}{U_{tot,mouillé}}$$

et
$A_{s,\ libre}$ correspondant à la section d'écoulement libre [$m^2$] dans le réacteur à couche tourbillonnante et
$U_{tot,\ mouillé}$ correspondant au pourtour mouillé [m] de respectivement tous les encastrements dans le réacteur à couche tourbillonnante,
$d_{hyd}$ étant de 0,7 à 1,8 m, $u_L$ étant de 0,05 à 4 m/s et $d_{32}$ étant de 5 à 500 μm.

2. Procédé selon la revendication 1, **caractérisé en ce que** $d_{hyd}$ est de 0,8 à 1,7 m, préférablement 0,9 à 1,6 m.

3. Procédé selon la revendication 1 ou 2, **caractérisé en ce que** $u_L$ est de 0,06 à 3 m/s, préférablement 0,07 à 2 m/s.

4. Procédé selon l'une quelconque des revendications précédentes, **caractérisé en ce que** le gaz de réaction contient au moins 50 % en volume, préférablement au moins 70 % en volume, particulièrement préférablement au moins 90 % en volume, de chlorure d'hydrogène.

5. Procédé selon l'une quelconque des revendications précédentes, **caractérisé en ce que** la pression absolue dans le réacteur à couche tourbillonnante est de 0,1 à 1 MPa, préférablement 0,13 à 0,7 MPa, particulièrement préférablement 0,15 à 0,5 MPa.

6. Procédé selon l'une quelconque des revendications précédentes, **caractérisé en ce que** le catalyseur est choisi dans le groupe comportant Fe, Al, Ca, Ni, Mn, Cu, Zn, Sn, C, V, Ti, Cr, B, P, O et des mélanges correspondants.

7. Procédé selon l'une quelconque des revendications précédentes, **caractérisé en ce que** le catalyseur, par rapport au silicium, est contenu en une proportion de 0,1 à 20 % en poids, préférablement 0,5 à 15 % en poids, particulièrement préférablement 0,8 à 10 % en poids, en particulier 1 à 5 % en poids.

8. Procédé selon l'une quelconque des revendications précédentes, **caractérisé en ce que** $d_{32}$ est de 10 à 480 $\mu$m, préférablement de 15 à 450 $\mu$m.

Fig. 1

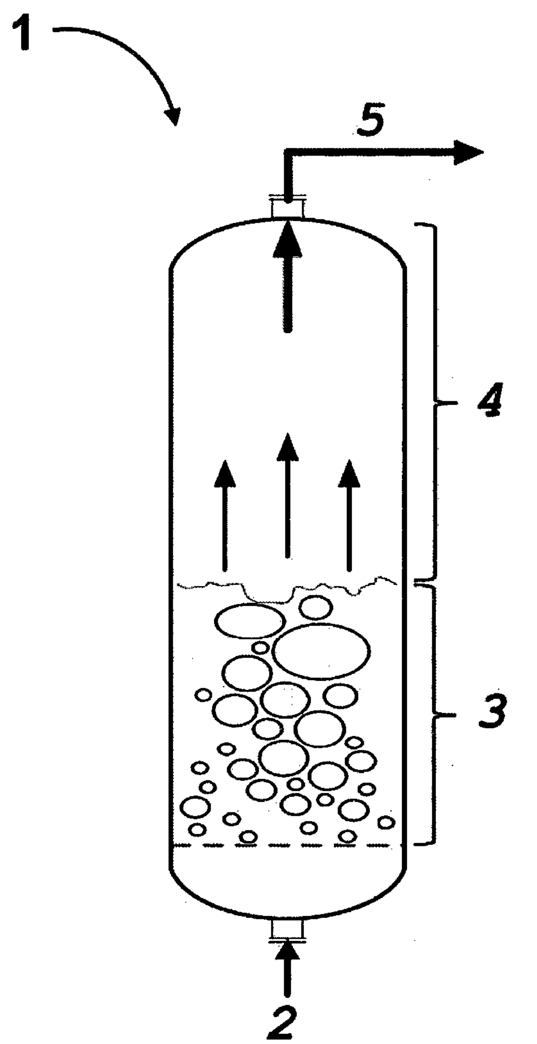

Fig. 2

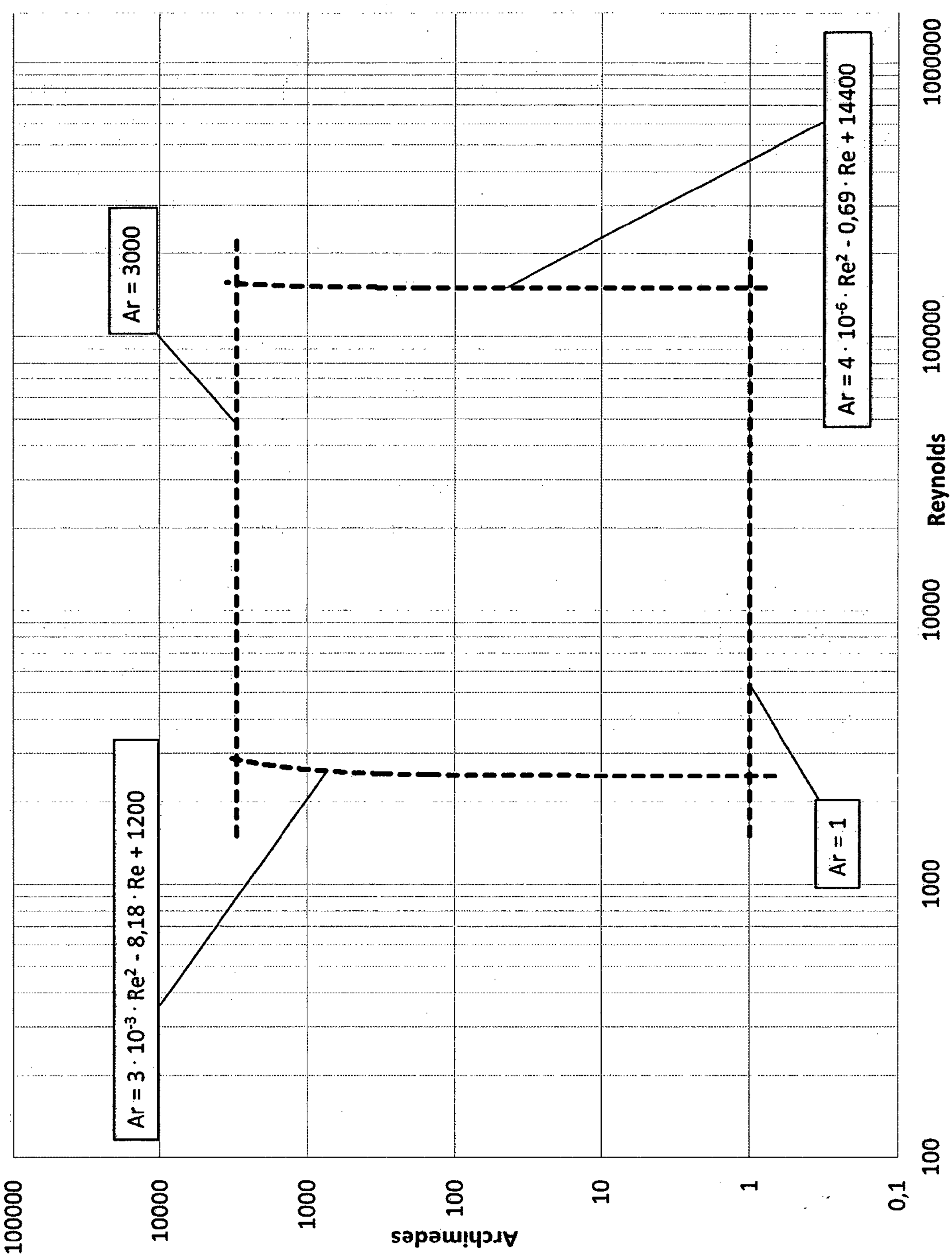
Ar = 3000
Ar = 4 · $10^{-6}$ · $Re^2$ - 0,69 · Re + 14400
Ar = 3 · $10^{-3}$ · $Re^2$ - 8,18 · Re + 1200
Ar = 1
100000
10000
1000
100
10
1
0,1
Archimedes
100
1000
10000
100000
1000000
Reynolds

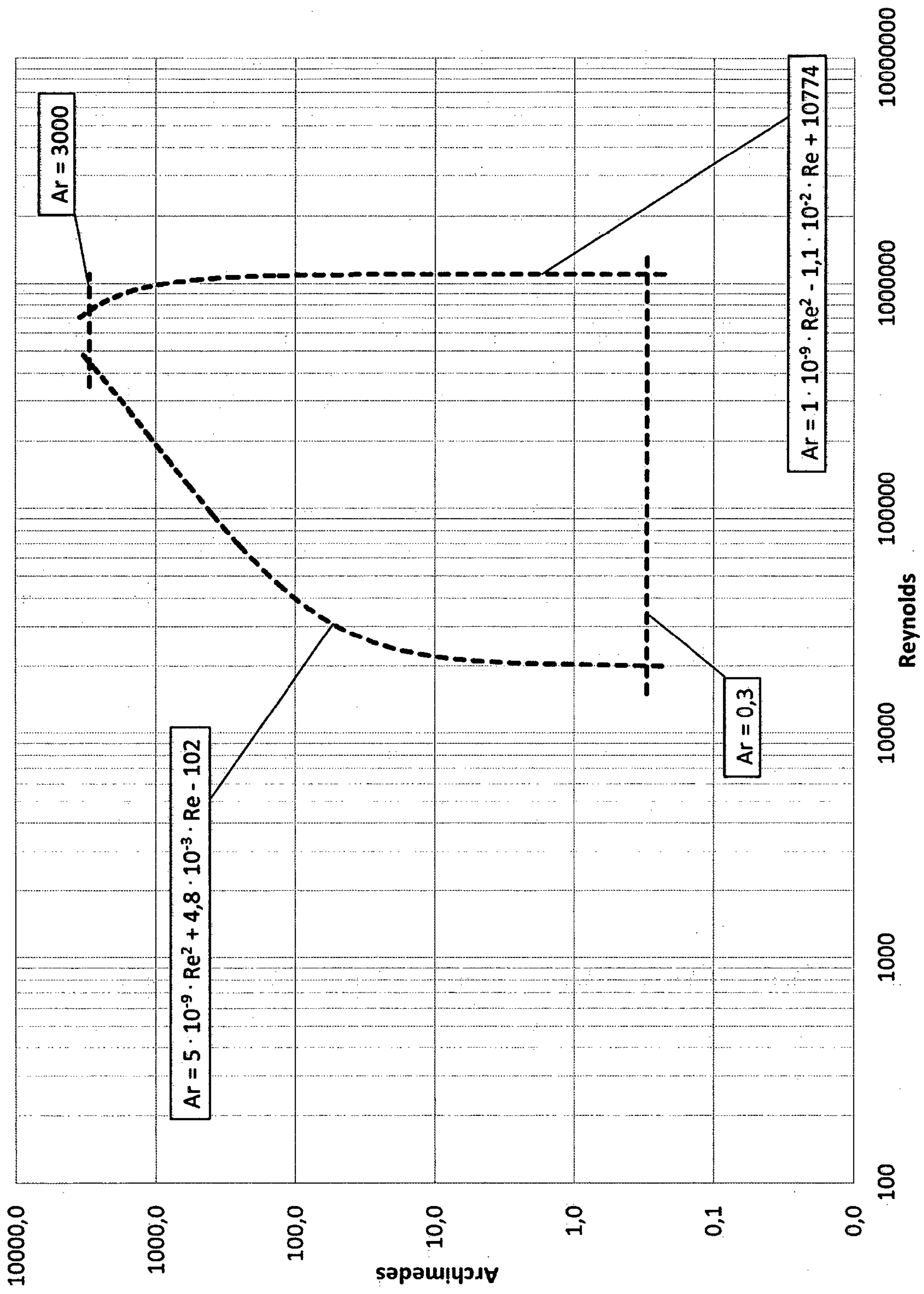
Ar = 3000
Ar = 1 · 10⁻⁹ · Re² - 1,1 · 10⁻² · Re + 10774
Ar = 5 · 10⁻⁹ · Re² + 4,8 · 10⁻³ · Re - 102
Ar = 0,3
Archimedes
10000,0
1000,0
100,0
10,0
1,0
0,1
0,0
Reynolds
100
1000
10000
100000
1000000
10000000

Fig. 3

Fig. 4

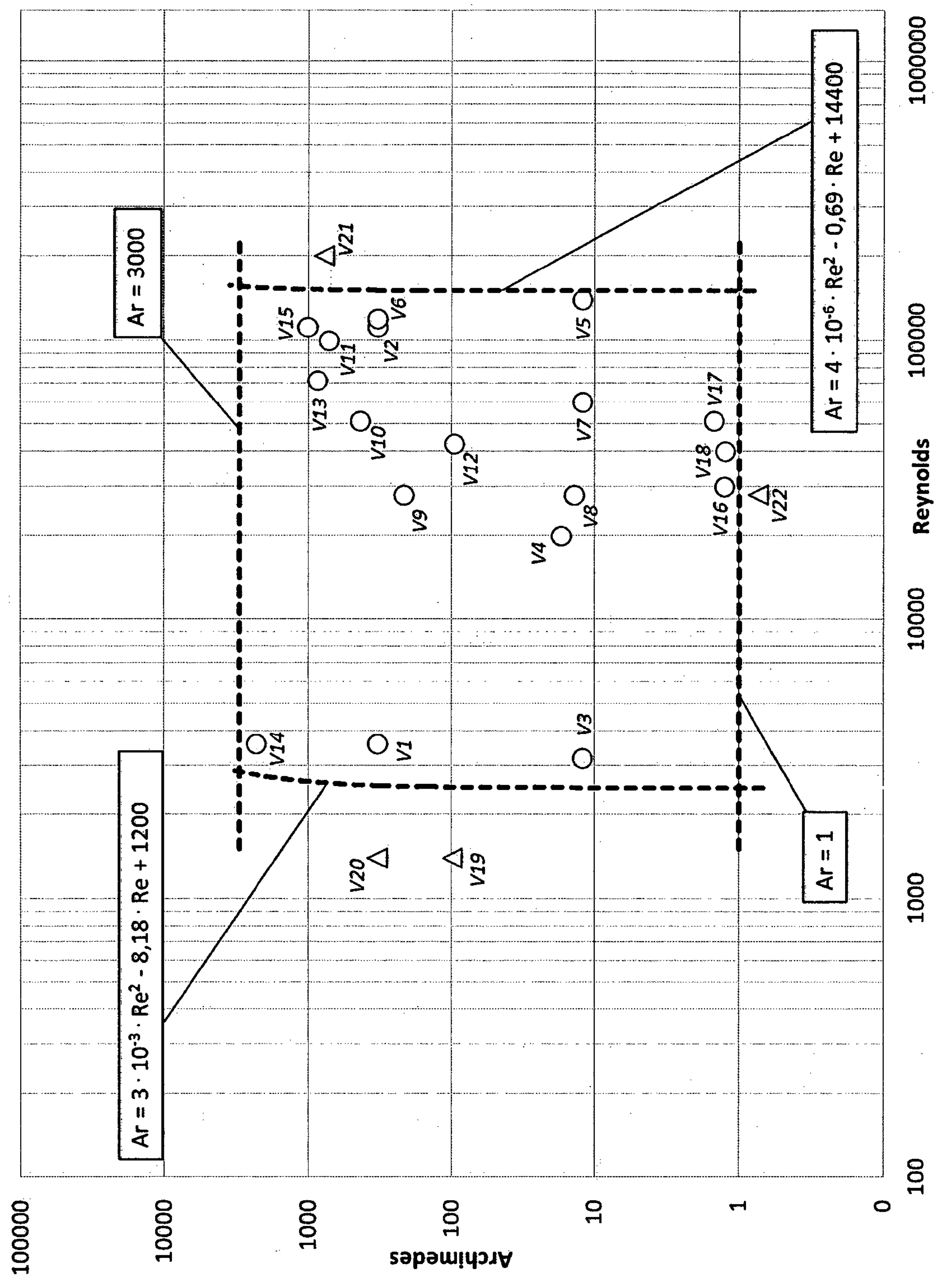
Archimedes
100000
10000
1000
100
10
1
0
Reynolds
100
1000
10000
100000
1000000
Ar = 3000
Ar = 1
Ar = 3 · 10⁻³ · Re² - 8,18 · Re + 1200
Ar = 4 · 10⁻⁶ · Re² - 0,69 · Re + 14400
V1
V2
V3
V4
V5
V6
V7
V8
V9
V10
V11
V12
V13
V14
V15
V16
V17
V18
V19
V20
V21
V22

Fig. 5

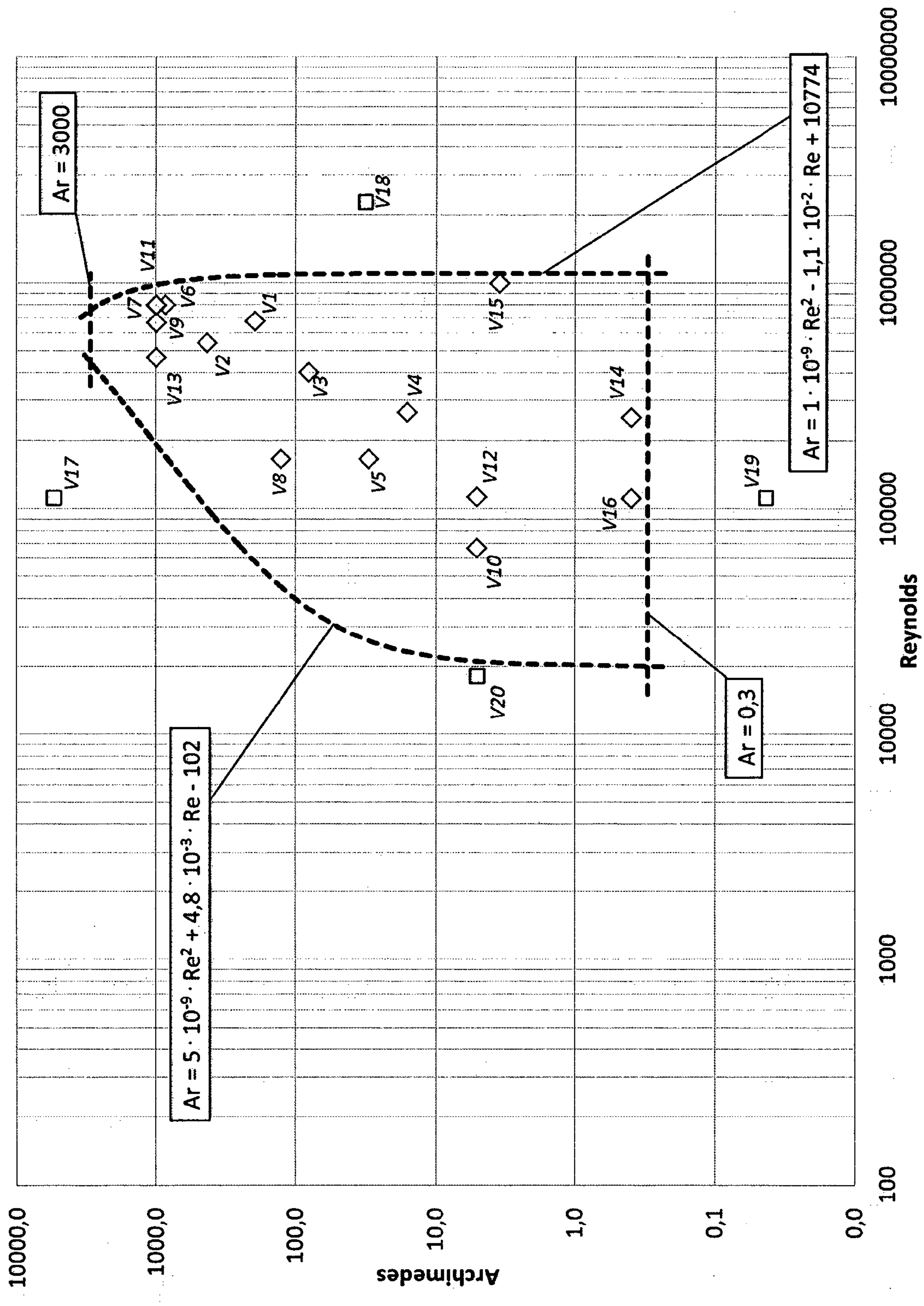
Ar = 3000
Ar = 1 · 10⁻⁹ · Re² - 1,1 · 10⁻² · Re + 10774
Ar = 5 · 10⁻⁹ · Re² + 4,8 · 10⁻³ · Re - 102
Ar = 0,3
V1
V2
V3
V4
V5
V6
V7
V8
V9
V10
V11
V12
V13
V14
V15
V16
V17
V18
V19
V20
Archimedes
10000,0
1000,0
100,0
10,0
1,0
0,1
0,0
Reynolds
100
1000
10000
100000
1000000
10000000

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010028878 A1
- WO 2016198264 A1
- WO 0248024 A